# EUROPÄISCHE PATENTSCHRIFT

(11) **EP 0 734 613 B1**
(45) Veröffentlichungstag und Bekanntmachung des Hinweises auf die Patenterteilung: **22.07.1998**
(21) Anmeldenummer: 95935338.4
(22) Anmeldetag: 18.10.1995
(51) Int. Cl.: H02M 3/335

(54) **SCHALTNETZTEIL**
SWITCHED POWER SUPPLY
ALIMENTATION A DECOUPAGE

(30) Priorität: 19.10.1994 DE 4437459
(43) Veröffentlichungstag der Anmeldung: 02.10.1996
(73) Patentinhaber: SIEMENS AKTIENGESELLSCHAFT, 80333 München (DE)
(72) Erfinder: PRELLER, Peter, D-81243 München (DE)
(86) Internationale Anmeldenummer: DE9501449
(87) Internationale Veröffentlichungsnummer: WO9613092

(56) Entgegenhaltungen:
- EP-A- 0 380 033
- DE-A- 3 312 209

## Beschreibung

Die Erfindung betrifft ein Schaltnetzteil, umfassend einen Transformator mit einer Primärwicklung und einer Sekundärwicklung zum Anschluß einer Last,
einen mit der Primärwicklung des Transformators in Reihe liegenden Schalttransistor, durch den eine gleichgerichtete Spannung in getakteter Weise an die Primärwicklung des Transformators gelegt werden kann, sowie
eine Steuereinrichtung, die aufweist:
(a) einen Ausgang zur Steuerung des Schalttransistors,
(b) einen Eingang für ein Nulldurchgangssignal, der von einer im Transformator induzierten Spannung gesteuert wird,
(c) einen Eingang für ein Regelsignal, der von einer an die Sekundärspannung gekoppelten Spannung gesteuert wird,
(d) ein Mittel zum Blockieren des Einschaltens des Schalttransistors, wenn der Betrag einer vom Regelsignal abgeleiteten Regelabweichung einen Schwellwert unterschreitet.

Bei einem Schaltnetzteil wird bekanntlich der durch die Primärwicklung des Schaltnetzteiltransformators fließende Strom mittels des Schalttransistors zerhackt. Die auf der Sekundärseite des Transformators induzierten Spannungsimpulse werden gleichgerichtet und geglättet, um eine Last mit Gleichspannung zu versorgen. Die Ein- und Ausschaltphasen des Schalttransistors werden von der Steuerungseinrichtung in Abhängigkeit von der Belastung derart gesteuert, daß eine möglichst lastunabhängige, konstant ausgeregelte Sekundärspannung vorliegt.

Bei Schaltnetzteilen mit einer frei schwingenden Regelungseinrichtung wird bekanntlich in der Steuerungseinrichtung der Nulldurchgang einer im Transformator induzierten Spannung ausgewertet, um daraufhin den Schalttransistor einzuschalten. Dadurch ist gewährleistet, daß zum Einschaltzeitpunkt des Schalttransistors der Transformator entmagnetisiert ist. Der Ausschaltzeitpunkt des Schalttransistors wird in Abhängigkeit von einer an die sekundärseitige Ausgangsspannung gekoppelten Regelspannung festgelegt. Speziell bei einem Schaltnetzteil mit dem integrierten Schaltkreis TDA 4605 der Firma Siemens wird hierzu außerdem ein den Primärstrom nachbildendes Spannungssignal erzeugt. Der Schalttransistor wird dann ausgeschaltet, wenn das Primärstromsignal eine aus der Regelspannung gebildete Regelabweichung übersteigt.

Bei geringer zu versorgender Last, was üblicherweise im Standby-Betrieb des zu versorgenden elektronischen Geräts vorliegt, würden bei derartigen freischwingenden Schaltnetzteilen ohne weitere Schaltmaßnahmen die Ausgangsspannung und die Schaltfrequenz relativ hoch ansteigen. Um dies zu vermeiden, weist der integrierte Schaltkreis TDA 4605 Schaltungsmittel auf, durch die ein wiederholtes Einschalten des Schalttransistors blockiert wird, wenn die Regelabweichung einen Schwellwert unterschreitet.

Bei einem in der europäischen Patentanmeldung EP-A-0 124 734 beschriebenen Schaltnetzteil ist zwischen dem Eingang für das Nulldurchgangssignal und dem Eingang für die Regelspannung der Regelschaltung ein Koppelkondensator vorgesehen. Dadurch wird das Nulldurchgangssignal auf die Regelspannung gekoppelt. Dies bewirkt, daß die Regelspannung beim Einschaltzeitpunkt abgesenkt wird. Dadurch erhöht sich die Regelabweichung, so daß der Primärstrom relativ hoch ansteigt und die Sekundärspannung kurzzeitig erhöht wird. Dies wiederum sorgt beim nächsten Nulldurchgang dafür, daß die Regelspannung relativ hoch ist, so daß die Regelabweichung gering wird. Bei entsprechender Dimensionierung liegt die Regelabweichung unterhalb der auch hier vorgesehenen Blockierungsschwelle für das Wiedereinschalten des Schalttransistors, so daß das Einschalten des Schalttransistors für einige Nulldurchgänge blockiert wird, bis die Regelspannung soweit abgesunken ist, daß die Schwelle nicht mehr wirksam wird. Die Kopplung zwischen dem Nulldurchgangssignaleingang und dem Regelsignaleingang sorgt demnach dafür, daß die Schaltfrequenz bei niedriger Belastung des sekundärseitigen Schaltnetzteils verringert wird.

Es hat sich gezeigt, daß durch die bekannten Lösungen die Schaltfrequenz bei niedriger Belastung wie etwa im Standby-Betrieb nur relativ grob eingestellt werden kann. Da die Schaltfrequenz stets oberhalb des Hörbereichs von etwa 20 kHz liegen sollte, muß ein relativ großer Sicherheitsabstand eingehalten werden. Darüber hinaus sind die beschriebenen Lösungen nicht frequenzstabil. Durch den Einfluß parasitärer Elemente unterliegt die Schaltfrequenz Schwankungen, so daß es vorkommt, daß die Schaltfrequenz kurzzeitig in den Hörbereich abfällt.

Die Aufgabe der vorliegenden Erfindung besteht darin, ein Schaltnetzteil der eingangs genannten Art derart weiterzubilden, daß die Schaltfrequenz bei niedriger sekundärseitiger Belastung (Standby-Betrieb) möglichst genau und möglichst frequenzstabil auf einen verringerten, vorzugsweise knapp oberhalb der Hörschwelle liegenden Wert eingestellt werden kann.

Erfindungsgemäß wird dies dadurch gelost, daß der Ausgang der Steuerungseinrichtung und ihr Eingang für das Regelsignal über ein Kopplungselement gekoppelt sind und das Kopplungselement Tiefpaßcharakteristik aufweist.

Beim erfindungsgemäßen Schaltnetzteil kann im Standby-Betrieb der Sicherheitsabstand der Schaltfrequenz vom Hörbereich relativ gering gewählt werden. Die Standby-Schaltfrequenz wird vorzugsweise knapp über dem Hörbereich, etwa zwischen 20 kHz und 25 kHz eingestellt. Wegen dieser niedrigen Schaltfrequenz sind die im wesentlichen im Schalttransistor entstehenden Schaltverluste relativ niedrig. Die Standby-Verlustleistung ist deshalb gering.

Das Kopplungselement sorgt dafür, daß der positiv gerichtete Schaltimpuls am Ausgang der Steuerungseinrichtung tiefpaßgefiltert auf die Regelspannung gekoppelt wird. Dadurch wird die Regelspannung erhöht, so daß die in der Steuerungseinrichtung gebildete Regelabweichung unter die in der Steuerungseinrichtung gebildete Blockierungsschwelle fällt. Dadurch wird das Einschalten des Schalttransistors während einer Anzahl von nachfolgenden Nulldurchgängen der induzierten Transformatorspannungen blockiert. Erst dann, wenn der tiefpaßgefilterte, verzögerte Einschaltimpuls abgeklungen ist und die in die Steuerungseinrichtung eingespeiste Regelspannung entsprechend abfällt, wird das Einschalten des Schalttransistors wieder freigegeben. Durch geeignete Dimensionierung der Zeitkonstante des Tiefpasses kann die Anzahl der ausgeblendeten Nulldurchgänge und folglich die Schaltfrequenz des Netzteils relativ exakt eingestellt werden.

Nachfolgend wird die Erfindung anhand des in der Zeichnung dargestellten Ausführungsbeispiels näher erläutert. Es zeigen
- Figur 1: die wesentlichen Teile eines erfindungsgemäßen Schaltnetzteils und
- Figur 2: ein Signaldiagramm von im Schaltnetzteil der Figur 1 auftretenden Signalen.

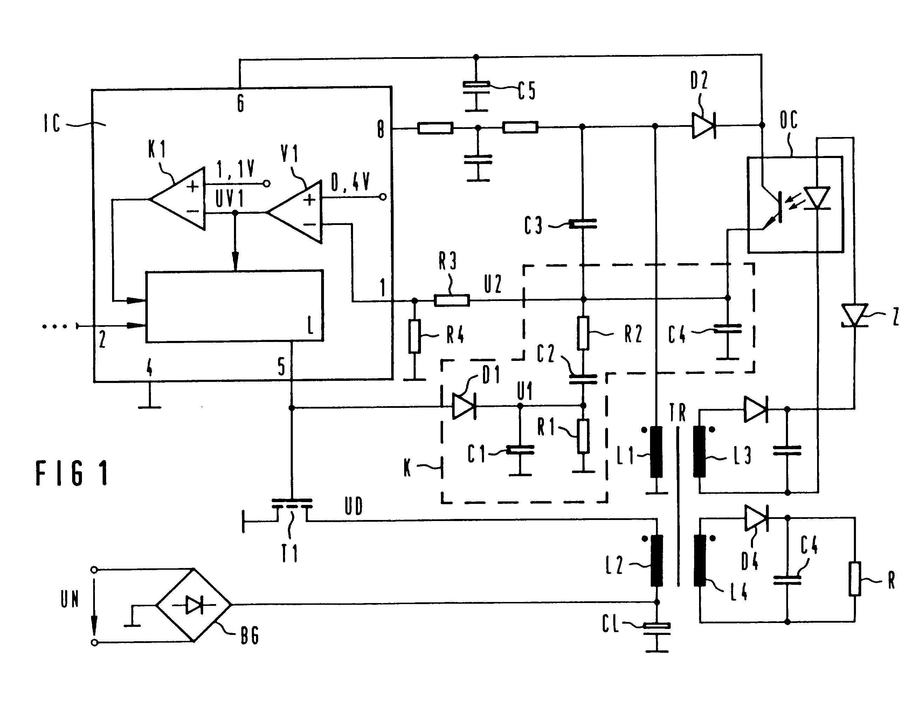

Das Schaltnetzteil gemäß Figur 1 weist einen Transformator TR auf mit zwei Primärwicklungen L1, L2 und zwei Sekundärwicklungen L3, L4. Ein Schaltransistor T1 liegt in Reihe mit der Primärwicklung L2. Der aus dem Schalttransistor T1 und der Primärwicklung L2 gebildete Strompfad wird von der Ausgangsseite eines Brückengleichrichters BG mit der gleichgerichteten Netzwechselspannung UN versorgt. Die gleichgerichtete Netzwechselspannung wird in einem Ladekondensator CL geglättet. An der Sekundärwicklung L4 ist über eine Gleichrichterdiode D4 und einen Glättungskondensator C4 eine Last R angeschlossen. Eine Steuerungseinrichtung IC sorgt dafür, daß die an der Last R anliegende sekundärseitige Ausgangsspannung des Schaltnetzteils möglichst konstant ausgeregelt wird. Als Steuerungseinrichtung IC kann beispielsweise der integrierte Schaltkreis TDA 4605 der Firma Siemens verwendet werden.

Die Steuerungseinrichtung IC wird im eingeschwungenen Zustand an einem Anschluß 6 von der Primärwicklung L1 über eine Gleichrichterdiode D2 und einen Glättungskondensator C5 mit Spannung versorgt. Ein Anschluß 4 der Steuerungseinrichtung IC ist mit Primarmasse verbunden. An einem Anschluß 8 der Steuerungseinrichtung IC wird die an der Primärwicklung L1 abgreifbare Spannung nach Ausfilterung hochfrequenter Überschwinger eingespeist. An einem Anschluß 1 der Steuerungseinrichtung IC wird ein an die sekundärseitige Ausgangsspannung gekoppeltes Regelsignal eingespeist. Hierzu wird die an der Sekundärwicklung L3 abgreifbare Spannung nach Gleichrichtung, Glättung und Bewertung, z. B. mittels einer Zenerdiode Z, über einen Optokoppler OC auf die Primärseite übertragen. Durch den Spannungsteiler R3, R4 wird die Regelspannung auf einen gewünschten Pegelbereich umgesetzt. Ein Ausgangsanschluß 5 der Steuerungseinrichtung IC ist mit dem Steuereingang des Schalttranssitors T1 verbunden. An einem Anschluß 2 der Steuerungseinrichtung IC wird ein an den durch die Primärwicklung L2 fließenden Strom gekoppeltes Primärstromsignal eingespeist. Hierzu ist der Anschluß 2 mit einem zwischen dem Ausgang des Brückengleichrichters BG und Primärmasse geschalteten RC-Glied (nicht dargestellt) verbunden. Beim Einschalten des Schaltransistors wird in der Steuerungseinrichtung IC das RC-Glied entladen, so daß der anschließende Aufladevorgang den fließenden Primärstrom angibt.

Ein (positiv gerichteter) Einschaltimpuls am Ausgang 5 der Steuerungseinrichtung IC wird dann erzeugt, wenn das am Anschluß 8 eingespeiste Signal einen Nulldurchgang aufweist. Zur Abschaltung des Schalttransistors werden die Regelspannung am Anschluß 1 und das Primärstromsignal am Anschluß 2 verwendet. Hierzu wird in einem Regelverstärker V1 eine Regelabweichung UV1 gebildet. Am Plus-Eingang des Regelverstärkers V1 wird eine Referenzspannung von 0,4V eingespeist, der Minus-Eingang ist mit dem Anschluß 1 verbunden. In einer Logikeinrichtung.L wird die Regelabweichung UV1 mit dem am Anschluß 2 eingespeisten Primärstromsignal verglichen. Wenn das Primärstromsignal die Regelabweichung UV1 übersteigt, wird der Einschaltimpuls am Ausgang 5 beendet und der Schalttransistor T1 abgeschaltet. Diese Regelung bewirkt, daß der maximale Primärstrom solange nachgestellt wird, bis die Regelabweichung einen gewünschten Wert erreicht hat und folglich die Sekundärspannung beim Sollwert liegt. Außerdem ist in der Steuerungseinrichtung IC ein Komparator K1 vorgesehen, durch den die Regelabweichung UV1 mit einem Schwellwert von 1,1 V verglichen wird. Der Komparator K1 erzeugt dann ein aktives Ausgangssignal, wenn die Regelspannung UV1 den Schwellwert von 1,1 V unterschreitet. Dies bewirkt in der Logikeinrichtung L, daß ein weiteres Einschalten des Schalttransistors T1 verhindert wird. Dies bewirkt bei geringer Regelabweichung, d.h. hoher Ausgangsspannung, wie sie beispielsweise bei der niedrigen Belastung im Standby-Betrieb vorliegt, daß Nulldurchgänge des am Anschluß 8 der Steuerungseinrichtung IC vorliegenden Signals ignoriert und nicht zum Einschalten des Schalttransistors T1 verwendet werden. Wenn die Sekundärspannung wegen des Stromverbrauchs der zu versorgenden Last abfällt, nimmt die Regelabweichung UV1 zu, so daß das Ausgangssignal de Komparators K1 inaktiviert wird und ein Einschalten des Schalttransitors T1 wieder ermöglicht wird.

Die Kopplungseinrichtung K sorgt dafür, daß Einschaltimpulse am Ausgang 5 der Steuerungseinrichtung IC auf die am Anschluß 1 eingespeiste Regelspannung tiefpaßgefiltert gekoppelt werden. Das Kopplungselement K ist im einzelnen folgendermaßen aufgebaut. Über eine Diode D1 wird ein Einschaltimpuls am Ausgang 5 der Steuerungseinrichtung IC in einen Energiespeicher eingekoppelt. Der Energiespeicher enthält einen nach Primärmasse geschalteten Kondensator C1 und einen dazu parallel liegenden Entladewiderstand R1. Der Kondensator C1 wird während der Einschaltphase des Transistors T1 durch das positive Steuersignal am Ausgang 5 über die Diode D1 ständig aufgeladen; während der Ausschaltphase wird er über den Widerstand R1 entladen. Die am Kondensator C1 anliegende Spannung U1 wird über einen Koppelkondensator C2, der Gleichspannung abtrennt, auf das RC-Glied R2, C4 geführt. Der Kondensator C4 ist über den Spannungsteiler R3, R4 mit dem Regelspannungseingang 1 der Steuerungseinrichtung IC verbunden. Die am Kondensator C4 anliegende Spannung U2 wird also der vom Optokoppler OC gelieferten Spannung überlagert. Das RC-Glied R2, C4 sorgt für ein zeitverzögertes Anheben der Regelspannung U2. Es verhindert dadurch, daß die Regelspannung bereits während der Einschaltphase des Schalttransistors T1 durch das Koppelelement K wesentlich beeinflußt wird.

In Weiterbildungen der Erfindung kann zwischen dem Kondensator C1 und dem Koppelkondensator C2 ein Emitterfolgertransistor vorgesehen werden, um die Spannung U1 zu verstärken. Der Basis-Emitter-Strompfad des Emitterfolgertransistors ist zwischen den Kondensator C1 und den Kondensator C2 geschaltet. Der Emitter ist über einen Arbeitswiderstand nach Primärmasse verbunden und der Kollektor ist an eine positive Versorgungsspannung angeschlossen, beispielsweise den Versorgungsanschluß 6 der Steuerungseinrichtung IC. Die Verwendung des Optokopplers OC hat den Vorteil, daß die an der Sekundärwicklung L3 abgegriffene Sekundärspannung mit der Verstärkung des Optokopplers OC verstärkt wird. Dadurch liegt eine gute Ausregelung von den durch die gleichgegerichtete Netzwechselspannung UN verursachten Brummeinflüssen vor.

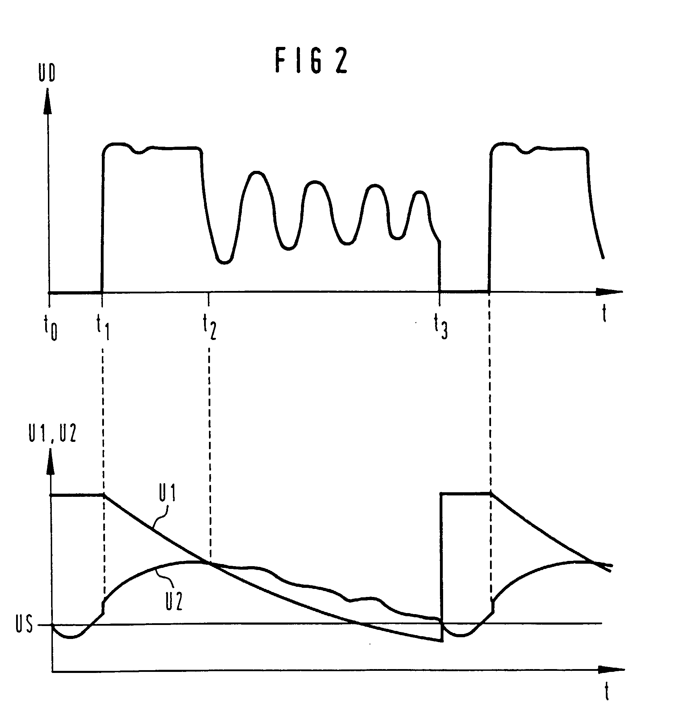

Im Zusammenhang mit Figur 2 werden nun die Signalverläufe der Spannungen U1, U2 und der Drainspannung UD des Schalttransistors T1 beschrieben. Zwischen den Zeitpunkten t₀ und t₁ ist der Schalttransistor T1 eingeschaltet. Die Spannung U1 im Ladekondensator C1 bleibt konstant, da der Kondensator C1 über die Diode D1 ständig nachgeladen wird.

Zum Einschaltzeitpunkt t₀ ist die am Anschluß 1 vorliegende Regelspannung niedrig, so daß das Ausgangssignal des Komparators K1 nicht aktiviert ist. Zum Zeitpunkt t₁ wird der Schalttransistor T1 von der Logikeinrichtung L durch den Vergleich zwischen der Regelabweichung UV1 und dem Primärstromsignal am Anschluß 2 abgeschaltet. Durch entsprechende Dimensionierung des RC-Gliedes R2, C4 wird nun die am Kondensator C1 anliegende Spannung U1 in den Kondensator C4 übernommen. Die Spannung U2 steigt an, so daß die Regelabweichung UV1 unterhalb der durch den Komparator K1 gebildeten Schaltschwelle liegt. Die entsprechende Schaltschwelle für die Spannung U2 ist in der Figur 2 mit US bezeichnet. Der Kondensator C4 wird durch den Spannungsteiler R3, R4 und die Stromaufnahme in den Anschluß 1 allmählich entladen und unterschreitet zum Zeitpunkt t₃ die Schwelle US bzw. die Regelabweichung UV1 übersteigt wiederum die vom Komparator K1 gebildete Schaltschwelle. Zwischen den Zeitpunkten t₂ und t₃ ist durch den aktivierten Komparator K1 das Wiedereinschalten des Schalttransistors T1 verhindert. Die Drainspannung UD des Transistors Tl führt dann freie Schwingungen aus. Zum Zeitpunkt t₃ ist die Regelspannung U2 soweit abgesunken, daß der Komparator K1 inaktiviert wird und ein Wiedereinschalten des Schalttransistors T1 mit dem nächsten Nulldurchgang der Transformatorspannung ermöglicht wird.

Es ist besonders vorteilhaft, den Nulldurchgangseingang 8 über einen Koppelkondensator C3 mit dem Regelspannungseingang 1 zu verbinden. Dadurch wird beim Einschalten (Nulldurchgang) des Schalttransistors T1 die Regelspannung U2 noch weiter abgesenkt. Dies hat eine längere Einschaltdauer des Schalttransistors T1 zur Folge. Die Regelung sorgt dafür, daß die Wartezeit zwischen t₂ und t₃ wegen der über den Optokoppler OC eingekoppelten höheren Sekundärspannung auf die Regelspannung U2 verlängert wird. Die Schaltfrequenz wird dadurch weiter stabilisiert. Darüber hinaus wird das Wiedereinschalten des Schaltransistors T1 während eines Minimums der Drainspannung UD begünstigt, so daß im Schalttransistor T1 Schaltverlustleistung eingespart wird.

Die verringerte Standby-Schaltfrequenz wird durch die Größe des Kondensators C3 grob eingestellt. Die Feineinstellung kann über den Widerstand R1 oder den Widerstand R2 erfolgen, der die Entladekennlinie für die Spannung U1 festlegt. Durch diese Dimensionierungen läßt sich die Verzögerungszeit zwischen t₁ und t₃ relativ genau einstellen. Die Schaltfrequenz im Standby-Betrieb kann demnach knapp oberhalb der Hörgrenze liegen. Sie bleibt dabei stabil.

Während des Normalbetriebs, bei relativ hoher sekundärseitiger Belastung, wird die Regelspannung U2 durch entsprechende Einkopplung über den Optokoppler OC niedriger. Sobald die Regelspannung U2 zum Zeitpunmkt des ersten Nulldurchgangs t₂ nicht mehr die Schwelle US erreicht, also der Komparator K1 nicht aktiviert ist, wird das Wiedereinschalten des Schalttransistors T1 nicht mehr blockiert. Das Schaltnetzteil arbeitet im normalen freischwingenden Betrieb. Zur Vermeidung von lastabhängigen Frequenzsprüngen sollte das RC-Glied R2, C4 derart dimensioniert werden, daß das Maximum der Regelspannung U2 nicht später als zum Zeitpunkt t₂ vorliegt.

## Patentansprüche

1. Freischwingendes Schaltnetzteil, umfassend:
- einen Transformator (TR) mit einer Primärwicklung (L2) und einer Sekundärwicklung (L4) zum Anschluß einer Last (R),
- einen mit der Primärwicklung (L2) des Transformators (TR) in Reihe liegenden Schalttransistor (T1), durch den eine gleichgerichtete Spannung (UN) in getakteter Weise an die Primärwicklung (L2) des Transformators (TR) gelegt werden kann,
- eine Steuereinrichtung (IC), die aufweist:
(a) einen Ausgang (5) zur Steuerung des Schalttransistors (T1),
(b) einen Eingang (8),an dem ein Nulldurchgangssignal von einer im Transformator (TR) induzierten Spannung anliegt,
wobei ein Einschaltimpuls (5) erzeugt wird, wenn bei dem Nulldurchgangssignal ein Nulldurchgang auftritt,
(c) einen Eingang (1) für ein Regelsignal (U2), der von einer an die Sekundärspannung gekoppelten Spannung gesteuert wird,
(d) ein Mittel (K1) zum Blockieren des Einschaltens des Schalttransistors (T1), wenn der Betrag einer vom Regelsignal (U2) abgeleiteten Regelabweichung (UV1) einen Schwellwert (1,1 V) unterschreitet,
**dadurch gekennzeichnet,** daß
- der Ausgang (5) der Steuerungseinrichtung (IC) und ihr Eingang (1) für das Regelsignal (U2) über eine Kopplungseinrichtung (K) gekoppelt sind und
- die Kopplungseinrichtung (K) Tiefpaßcharakteristik aufweist.

2. Schaltnetzteil nach Anspruch 1,
**dadurch gekennzeichnet,** daß die Kopplungseinrichtung (K) einen mit dem Ausgang (5) der Steuerungseinrichtung (IC) verbundenen Eingang und einen mit dem Eingang (1) für das Regelsignal (U2) verbundenen Ausgang aufweist und daß die Kopplungseinrichtung (K) eingangsseitig ein Impulsspeichermittel (D1, C1, R1) und ausgangsseitig ein Element mit RC-Charakteristik (R2, C4) aufweist.

3. Schaltnetzteil nach Anspruch 2,
**dadurch gekennzeichnet,** daß das Impulsspeichermittel (D1, C1, R1) einen Kondensator (C1) mit parallel geschaltetem Widerstand (R1) und eine Diode (D1), durch die die Parallelschaltung aus dem Kondensator und dem Widerstand mit dem Ausgang (5) der Steuerungseinrichtung (IC) verbunden ist, umfaßt.

4. Schaltnetzteil nach Anspruch 3,
**dadurch gekennzeichnet,** daß das Impulsspeichermittel (D1, R1, C1) über einen Koppelkondensator (C2) zur Gleichspannungsauskopplung mit einem ausgangsseitigen RC-Glied (R2, C4) verbunden ist.

5. Schaltnetzteil nach einem der Ansprüche 2 bis 4,
**dadurch gekennzeichnet,** daß zwischen das Impulsspeichermittel (D1, R1, C1) und das Element mit RC-Charakteristik (R2, C4) ein Verstärker geschaltet ist.

6. Schaltnetzteil nach einem der Ansprüche 1 bis 5,
**gekennzeichnet durch** kapazitive Kopplung (C3) des Eingangs (8) für das Nulldurchgangssignal und des Eingangs (1) für das Regelsignal der Steuerungseinrichtung.

7. Schaltnetzteil nach einem der Ansprüche 1 bis 6,
**dadurch gekennzeichnet,** daß der Eingang (1) für das Regelsignal der Steuerungseinrichtung über einen Optokoppler (OC) mit einer weiteren Sekundärwicklung (L3) verbunden ist.

## Claims

1. Free-running switched-mode power supply, comprising:
- a transformer (TR) having a primary winding (L2) and a secondary winding (L4) for connection of a load (R),
- a switching transistor (T1) which is connected in series with the primary winding (L2) of the transformer (TR) and by means of which a rectified voltage (UN) can be applied in a pulsed manner to the primary winding (L2) of the transformer (TR),
- a control device (IC) which has:
(a) an output (5) for controlling the switching transistor (T1),
(b) an input (8) to which a zero-crossing signal is applied by a voltage induced in the transformer (TR), a switching-on pulse (5) being produced when a zero crossing occurs in the zero-crossing signal,
(c) an input (1) for a control signal (U2) which is controlled by a voltage coupled to the secondary voltage,
(d) a means (K1) for inhibiting the switching transistor (T1) from switching on when the magnitude of a control error (UV1), which is derived from the control signal (U2), is less than a threshold value (1.1 V),
characterized in that
- the output (5) of the control device (IC) and its input (1) for the control signal (U2) are coupled via a coupling device (K), and
- the coupling device (K) has a low-pass filter characteristic.

2. Switched-mode power supply according to Claim 1,
characterized in that
the coupling device (K) has an input which is connected to the output (5) of the control device (IC) and an output which is connected to the input (1) for the control signal (U2), and in that the coupling device (K) has a pulse storage means (D1, C1, R1) on the input side and an element with an RC characteristic (R2, C4) on the output side.

3. Switched-mode power supply according to Claim 2,
characterized in that
the pulse storage means (D1, C1, R1) comprises a capacitor (C1), which has a parallel-connected resistor (R1), and a diode (D1) by means of which the parallel circuit formed by the capacitor and the resistor is connected to the output (5) of the control device (IC).

4. Switched-mode power supply according to Claim 3,
characterized in that
the pulse storage means (D1, R1, C1) is connected, via a coupling capacitor (C2) for the DC voltage output, to an RC element (R2, C4) on the output side.

5. Switched-mode power supply according to one of Claims 2 to 4,
characterized in that
an amplifier is connected between the pulse storage means (D1, R1, C1) and the element having an RC characteristic (R2, C4).

6. Switched-mode power supply according to one of Claims 1 to 5,
characterized by
capacitive coupling (C3) of the input (8) for the zero-crossing signal and of the input (1) for the control signal of the control device.

7. Switched-mode power supply according to one of Claims 1 to 6,
characterized in that the input (1) for the control signal of the control device is connected via an optocoupler (OC) to a further secondary winding (L3).

## Revendications

1. Alimentation à découpage oscillant librement, comprenant:
- un transformateur (TR) avec un enroulement primaire (L2) et un enroulement secondaire (L4) auquel est reliée une charge (R ),
- un transistor de commutation (T1) monté en série avec l'enroulement primaire (L2) du transformateur (TR) et au moyen duquel une tension redressée (UN) peut être appliquée, par impulsions, à l'enroulement primaire (L2) du transformateur (TR),
- un dispositif de commande (IC), qui comprend:
(a) une sortie (5) pour la commande du transistor de commutation (T1),
(b) une entrée (8) au niveau de laquelle est appliqué un signal de passage par zéro d'une tension induite dans le transformateur (TR), une impulsion d'enclenchement (5) étant produite lorsqu'un passage par zéro se présente dans le signal de passage par zéro,
(c) une entrée (1) pour un signal de régulation (U2) qui est commandé par une tension couplée à la tension secondaire,
(d) un moyen (k1) pour bloquer l'enclenchement du transistor de commutation (T1) lorsque la valeur d'une déviation de réglage (UV1) déduite du signal de régulation (U2) passe sous un seuil (1,1 V),
caractérisée en ce que
- la sortie (5) du dispositif de commande (IC) et son entrée (1) pour le signal de régulation (U2) sont couplées par le biais d'un dispositif de couplage (K) et
- le dispositif de couplage (K) a une caractéristique passe-bas.

2. Alimentation à découpage selon la revendication 1, caractérisée en ce que le dispositif de couplage (K) comprend une entrée reliée à la sortie (5) du dispositif de commande (IC) et une sortie reliée à l'entrée (1) pour le signal de régulation (U2), et en ce que le dispositif de couplage (K) comprend, sur le côté d'entrée, un moyen totalisateur d'impulsions (D1, C1, R1) et, sur le côté de sortie, un élément à caractéristique RC (R2, C4).

3. Alimentation à découpage selon la revendication 2, caractérisée en ce que le moyen totalisateur d'impulsions (D1, C1, R1) comprend un condensateur (C1) avec une résistance (R1) montée en parallèle et une diode (D1) par l'intermédiaire de laquelle le montage en parallèle formé par le condensateur et la résistance est relié à la sortie (5) du dispositif de commande (IC).

4. Alimentation à découpage selon la revendication 3, caractérisée en ce que le moyen totalisateur d'impulsions (D1, R1, C1 ) est relié à un circuit RC (R2, C4) situé sur le côté de sortie par le biais d'un condensateur de liaison (C2) servant au découplage de la tension continue.

5. Alimentation à découpage selon l'une des revendications 2 à 4, caractérisée en ce qu'un amplificateur est intercalé entre le moyen totalisateur d'impulsions (D1, R1, C1) et l'élément à caractéristique RC (R2, C4).

6. Alimentation à découpage selon l'une des revendications 1 à 5, caractérisée par le couplage capacitif (C3) de l'entrée (8) pour le signal de passage par zéro et de l'entrée (1) pour le signal de régulation du dispositif de commande.

7. Alimentation à découpage selon l'une des revendications 1 à 6, caractérisée en ce que l'entrée (1) pour le signal de régulation du dispositif de commande est reliée à un autre enroulement secondaire (L3) par le biais d'un opto-coupleur (OC).
